# FASCICULE DE BREVET EUROPEEN

(11) **EP 2 303 606 B1**
(45) Date de publication et mention de la délivrance du brevet: **09.04.2014**
(21) Numéro de dépôt: 09757617.7
(22) Date de dépôt: 05.06.2009
(51) Int. Cl.: B60C 5/04

(54) **CHAMBRE A AIR ET PROCEDE DE FABRICATION D'UNE TELLE CHAMBRE**
INNENSCHLAUCH UND VERFAHREN ZUR HERSTELLUNG SOLCH EINES SCHLAUCHS
INNER TUBE AND METHOD OF PRODUCING SUCH A TUBE

(30) Priorité: 06.06.2008 FR 0853752
(43) Date de publication de la demande: 06.04.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: BESTGEN, Luc, F-63140 Chatel-Guyon (FR); BIDET, Christian, F-63200 Riom (FR)
(74) Mandataire: Le Cam, Véronique Marie Christine
(86) Numéro de dépôt international: PCT/EP2009/056937
(87) Numéro de publication internationale: WO 2009/147236

(56) Documents cités:
- BE-A- 364 568
- FR-A- 543 230
- US-A- 2 203 124
- US-A- 2 325 354
- US-A- 2 535 120
- US-B1- 6 571 845

## Description

L'invention est relative à une chambre à air destinée à un ensemble monté constitué par ailleurs d'une jante et d'un pneumatique. L'invention vise plus particulièrement des chambres à air qui, notamment en cas de crevaison en cours de roulage, permettent à un usager de continuer à rouler.

Bien que non limitée à de telles applications, l'invention sera plus spécifiquement présentée en référence à des chambres à air destinées à des ensembles montés pour véhicules à deux roues et en particulier bicyclettes.

Les ensembles montés usuels de type « tube-type », c'est-à-dire avec chambre à air, sont constitués d'une jante, comportant notamment des crochets de jante, d'un pneumatique et d'une chambre à air dont la fonction est de tenir la pression et de maintenir le pneumatique sur la jante. En cas de crevaison, ces ensembles montés peuvent être réparés de manière simple. Une réparation peut consister à identifier l'origine de la fuite d'air et donc un trou sur la chambre à air et à obturer celui-ci à l'aide d'une pièce de réparation. Une telle réparation est assez simple et peut être effectuée avec un minimum d'expérience. Une autre solution consiste à remplacer la chambre à air percée par une nouvelle, lorsque l'usager en possède une à sa disposition.

Lorsque l'usager est en cours de roulage et qu'il ne dispose ni de moyens de réparations ni d'une chambre à air de remplacement, il est souhaitable que celui-ci puisse rejoindre son domicile ou bien un lieu de réparation en continuant à rouler sans avoir à intervenir directement sur l'ensemble monté.

Ce souhait existe notamment pour des usagers qui utilisent leurs bicyclettes au quotidien par exemple pour se rendre à leur travail ; ce type d'usager n'est habituellement pas vêtu idéalement et ne possède pas le temps pour engager lui-même des réparations. En outre, la complexité de certaines bicyclettes notamment des roues arrières du fait par exemple de dérailleurs intégrés dans le moyeu rend souvent très délicate une éventuelle réparation.

Des solutions ont déjà été proposées à l'usager pour pallier à ce type d'incidents ; il s'agit notamment de solutions qui permettent de limiter les risques de crevaison. Il est ainsi proposé des pneumatiques qui comportent sous la bande de roulement une couche de gomme en surépaisseur ou bien des mousses de protection qui forment un barrage contre les perforations éventuelles.

Ces solutions peuvent effectivement améliorer la situation mais restent limitées à la prévention d'incidents affectant la bande de roulement ; des crevaisons par perforation des flancs du pneumatique ne peuvent notamment pas être évitées avec ce type de produit.

En outre, le confort et les performances en termes de résistance au roulement ne sont pas équivalents à celles d'un pneumatique usuel.

Il a déjà également été proposé d'utiliser des bandages pleins dont la particularité est bien entendu de ne pas pouvoir crever. Ce type de solutions est intéressante mais diminue les propriétés en terme de confort ou d'usure et complique souvent le montage de l'ensemble monté.

Des solutions relatives à la chambre à air ont également déjà été proposées. Le document US 2,535,120 décrit par exemple une chambre à air comportant des formes en reliefs de type bossage sur sa surface extérieure qui lorsque la chambre à air est mise en pression au sein d'un ensemble monté permettent de limiter ou d'éviter la mise en extension de la dite surface voire permettent de conserver une surface en compression. Ainsi, lors d'un perçage accidentel de la chambre à air, l'état de la surface ainsi obtenu du fait de la présence de bossage autorise un « colmatage » instantané du trou créé lors du perçage.

Les essais réalisés avec des chambres à air pour des ensembles montés destinés à des bicyclettes ont montré qu'une telle solution est d'une efficacité relative notamment en fonction du lieu de perçage sur la surface de la chambre à air.

Les inventeurs ont en effet su mettre en évidence que la réalisation des bossages sur une chambre à air pour bicyclette conduit à associer des formes en relief sur une surface torique, présentant notamment un petit rayon de courbure, qui dès lors que la forme desdits reliefs est définie de manière identique pour tous lesdits reliefs, les jonctions sur la surface torique obtenues ne sont pas identiques en fonction du lieu d'implantation desdits reliefs sur la surface. Certaines zones de jonction créent alors inévitablement des zones de mise en extension qui expliquent l'inefficacité d'une telle chambre à air dans certains cas de perçage dans lesdites zones en extension. Une solution qui consisterait à définir le profil de chacun des bossages en fonction de sa position sur la surface torique pourrait éviter une mise en extension de certaines zones de jonction mais elle ne peut pas être envisagée d'un point de vue industriel.

Il existe encore des dispositifs qui se présentent sous la forme d'aérosol qui permettent d'introduire une substance dans la chambre à air pour colmater une éventuelle perforation. Ces solutions qui peuvent également être utilisées à titre préventif sont bien entendu limitées à certains types d'altération du pneumatique et de la chambre à air qui ne sont pas trop importantes.

La direction circonférentielle de l'ensemble monté, ou direction longitudinale, est la direction correspondant à la périphérie de l'ensemble monté et définie par la direction de roulement de l'ensemble monté.

La direction transversale ou axiale de l'ensemble monté est parallèle à l'axe de rotation de l'ensemble monté.

La direction radiale est une direction coupant l'axe de rotation de l'ensemble monté et perpendiculaire à celui-ci.

L'axe de rotation de l'ensemble monté est l'axe autour duquel il tourne en utilisation normale.

Un plan radial ou méridien est un plan qui contient l'axe de rotation de l'ensemble monté.

Le plan médian circonférentiel, ou plan équatorial, est un plan perpendiculaire à l'axe de rotation de l'ensemble monté et qui divise l'ensemble monté en deux moitiés.

Les inventeurs se sont ainsi donnés pour mission la réalisation d'une chambre à air destinée à un ensemble monté pour bicyclette qui permettent à un usager de continuer à rouler lorsque ladite chambre à air a subi une crevaison par exemple due à un élément extérieur que celui-ci reste en place ou non.

Ce but a été atteint selon l'invention par une chambre à air pour un ensemble monté constituée d'une enveloppe polymérique fermée constituée d'une surface porteuse comportant une valve et des moyens, sur au moins une partie de ladite surface porteuse, autorisant une compression selon au moins la direction circonférentielle de ladite partie de l'enveloppe polymérique lors d'un gonflage aux conditions normales d'utilisation de l'ensemble monté, une ou plusieurs parties de la surface porteuse de l'enveloppe polymérique présentant une courbure méridienne telle que le rapport du rayon moyen de sa courbure méridienne sur le rayon d'un cercle de périmètre égal au périmètre méridien de la surface porteuse de l'enveloppe polymérique est supérieur à 2.5 et de préférence supérieur à 10, lorsque la chambre à air est gonflée avec une pression égale à 2000 Pascal et la somme des longueurs curvilignes dans un plan méridien desdites une ou plusieurs parties étant égale à 20 % de la longueur curviligne totale de ladite surface porteuse de l'enveloppe polymérique dans ledit plan méridien.

Les conditions normales de gonflage sont de 2 bars pour un pneumatique pour vélo tout terrain (VTT), 3 bars pour un pneumatique pour vélo routier urbain et 7 bars pour un pneumatique pour vélo routier sportif. Pour un véhicule motorisé, les conditions normales de gonflage sont les pressions préconisées par le constructeur.

La surface porteuse de la chambre à air est la surface de la chambre à air sur laquelle sont réalisées les moyens autorisant une compression selon au moins la direction circonférentielle de ladite partie de l'enveloppe polymérique lors d'un gonflage aux conditions normales d'utilisation de l'ensemble monté et qui se présentent par exemple sous la forme de creux et/ou de bosses.

Le rayon moyen de la courbure méridienne d'une partie de la surface porteuse de l'enveloppe polymérique correspond à la moyenne des rayons déterminés sur la courbe que forme ladite partie dans un plan méridien, sur une longueur curviligne inférieure au minimum entre 37% du rayon du cercle de périmètre égal à la longueur curviligne totale de la surface porteuse de l'enveloppe polymérique dans ledit plan méridien et 75% de la longueur curviligne de ladite partie, ladite longueur curviligne étant centrée sur le centre de la longueur curviligne de ladite partie. De préférence, les rayons sont déterminés sur une longueur curviligne inférieure ou égale au minimum entre 25% dudit rayon et 50% de ladite longueur curviligne de ladite partie. Chacun des rayons peut quant à lui être déterminé à partir d'un relevé de profil par différents moyens connus de l'homme du métier tels qu'une méthode des moindres carrés ou bien à partir d'un cercle passant par trois points.

Avantageusement selon l'invention, la surface porteuse de l'enveloppe polymérique est constituée d'au moins deux parties présentant chacune une longueur curviligne dans un plan méridien, la somme desdites longueurs curvilignes étant au moins égale à 25 % de la longueur curviligne totale de ladite surface porteuse de l'enveloppe polymérique dans ledit plan méridien, la courbure méridienne de chacune desdites parties étant telle que le rapport du rayon moyen de ladite courbure méridienne sur le rayon d'un cercle de périmètre égal au périmètre méridien de la surface porteuse de l'enveloppe polymérique est supérieur à 2.5 et de préférence supérieur à 10, lorsque la chambre à air est gonflée avec une pression égale à 2000 Pascal.

Avantageusement encore selon l'invention, la surface porteuse de l'enveloppe polymérique est constituée d'au moins trois parties présentant chacune une longueur curviligne dans un plan méridien, la somme desdites longueurs curvilignes étant au moins égale à 36 % de la longueur curviligne totale de ladite surface porteuse de l'enveloppe polymérique dans ledit plan méridien, la courbure méridienne de chacune desdites parties étant telle que le rapport du rayon moyen de ladite courbure méridienne sur le rayon d'un cercle de périmètre égal au périmètre méridien de la surface porteuse de l'enveloppe polymérique est supérieur à 2.5 et de préférence supérieur à 10, lorsque la chambre à air est gonflée avec une pression égale à 2000 Pascal.

Le nombre de parties de la surface porteuse de l'enveloppe polymérique dont la courbure méridienne de chacune desdites parties étant telle que le rapport du rayon moyen de ladite courbure méridienne sur le rayon d'un cercle de périmètre égal au périmètre méridien de la surface porteuse de l'enveloppe polymérique est supérieur à 2.5 et de préférence supérieur à 10, lorsque la chambre à air est gonflée avec une pression égale à 2000 Pascal augmente avec la dimension de la chambre à air. Une chambre à air pour bicyclette comporte avantageusement de une à trois parties ainsi définies. Une chambre à air de dimension plus importante notamment pour motocyclette comportera avantageusement cinq voire sept parties ainsi définies de sorte que la dimension des moyens autorisant une compression selon au moins la direction circonférentielle de ladite partie de l'enveloppe polymérique lors d'un gonflage aux conditions normales d'utilisation de l'ensemble monté reste raisonnable.

Une variante avantageuse de l'invention prévoit la surface porteuse de l'enveloppe polymérique présente une symétrie dans un plan méridien par rapport au plan équatorial.

Selon un mode de réalisation préféré de l'invention, la chambre à air pour un ensemble monté constituée d'une enveloppe polymérique fermée constituée d'une surface porteuse comportant une valve et des moyens sur au moins une partie de sa surface autorisant une compression selon au moins la direction circonférentielle de ladite partie de l'enveloppe polymérique lors d'un gonflage aux conditions normales d'utilisation de l'ensemble monté, présente une surface porteuse de l'enveloppe polymérique constituée d'au moins trois parties présentant chacune une longueur curviligne dans un plan méridien au moins égale à 12 % de la longueur curviligne totale de ladite surface porteuse de l'enveloppe polymérique dans ledit plan méridien, une partie radialement extérieure présentant une courbure méridienne telle que le rapport du rayon moyen de sa courbure méridienne sur le rayon d'un cercle de périmètre égal au périmètre méridien de la surface porteuse de l'enveloppe polymérique est supérieur à 2.5 et de préférence supérieur à 10 lorsque la chambre à air est gonflée avec une pression égale à 2000 Pascal, et le rapport du rayon moyen de la courbure méridienne des parties latérales sur le rayon d'un cercle de périmètre égal au périmètre méridien de la surface porteuse de l'enveloppe polymérique étant supérieur à 2.5 et de préférence supérieur à 10 lorsque la chambre à air est gonflée avec une pression égale à 2000 Pascal.

Avantageusement selon ce mode de réalisation préféré de l'invention, les deux parties latérales prolongent chacune axialement la partie radialement extérieure et sont reliées à ladite partie extérieure par des zones de jonction présentant un rayon de courbure inférieur à 6 mm.

Avantageusement selon le mode de réalisation préféré de l'invention, les deux parties latérales présentent des longueurs curvilignes dans un plan méridien identiques.

Des essais ont été réalisés avec des chambres à air selon l'invention et avec à des chambres à air telles que celles décrites précédemment comportant des formes en reliefs de type bossage leurs surfaces extérieures mais présentant une forme torique plus traditionnelle. Ces essais ont mis en évidence une plus grande efficacité des chambres à air selon l'invention quel que soit le type d'objets perforants et quel que soit le lieu de la perforation sur la surface de la chambre à air. En d'autres termes, les caractéristiques de la chambre à air selon l'invention permettent d'éliminer la mise en extension de l'enveloppe polymérique notamment au niveau des zones de jonction entre des moyens autorisant une compression de l'enveloppe polymérique, tels que par exemple des bossages, et la surface porteuse de l'enveloppe polymérique.

Les chambres à air étant habituellement utilisées pour plusieurs dimensions de pneumatiques, l'invention assure une compression selon au moins la direction circonférentielle de ladite partie de l'enveloppe polymérique lors d'un gonflage aux conditions normales d'utilisation de l'ensemble monté et peut autoriser une compression selon la direction axiale selon la dimension du pneumatique de l'ensemble monté dans lequel elle est montée. En effet, il est notamment usuel que plusieurs pneumatiques de sections différentes puissent être montés sur une jante donnée ; la plupart du temps une seule chambre à air peut être utilisée en combinaison avec ces différents pneumatiques.

Selon une variante de réalisation préférée de l'invention, la surface porteuse de l'enveloppe polymérique comporte des moyens autorisant une compression selon au moins la direction circonférentielle lors d'un gonflage aux conditions normales d'utilisation de l'ensemble monté sur la partie radialement extérieure. Selon cette variante de réalisation de l'invention, la compression selon au moins la direction circonférentielle de l'enveloppe polymérique est obtenue sur une zone correspondant à au moins une partie de la bande de roulement.

Selon une autre variante de l'invention, la surface porteuse de l'enveloppe polymérique comporte des moyens autorisant une compression selon au moins la direction circonférentielle lors d'un gonflage aux conditions normales d'utilisation de l'ensemble monté sur les deux parties latérales. Selon cette autre variante de réalisation de l'invention, la compression selon au moins la direction circonférentielle de l'enveloppe polymérique est obtenue sur une zone correspondant à au moins une partie des flancs du pneumatique. Les inventeurs ont su mettre en évidence qu'outre un effet sur d'éventuels perçages au niveau de ces parties latérales, cette variante de l'invention autorise une meilleure montabilité de l'ensemble monté en prévenant notamment les pincements de la chambre à air conduisant à des perçages de l'enveloppe polymérique lors du montage. Les inventeurs lient ce résultat à une rigidité modifiée des parties latérales du fait de la présence de ces moyens. Ils ont notamment mis en évidence que le choix de répartition de ces moyens sur les parties latérales influence les résultats en termes de montabilité.

L'invention prévoit encore de combiner les deux variantes précédemment énoncées en associant des moyens autorisant une compression selon au moins la direction circonférentielle lors d'un gonflage aux conditions normales d'utilisation de l'ensemble monté sur la partie radialement extérieure et sur les deux parties latérales. Selon ces variantes de réalisation de l'invention, les moyens dans leurs formes et dans leurs répartitions peuvent être différents sur la partie radialement extérieure et sur les deux parties latérales l'effet escompté pouvant notamment être différent.

Selon un premier mode de réalisation de l'invention, les moyens autorisant une compression selon au moins la direction circonférentielle d'une partie de l'enveloppe polymérique lors d'un gonflage aux conditions normales d'utilisation de l'ensemble monté sont des formes en relief, de type bosses ou bossages, par rapport à la surface porteuse.

Selon un deuxième mode de réalisation de l'invention, les moyens autorisant une compression selon au moins la direction circonférentielle d'une partie de l'enveloppe polymérique lors d'un gonflage aux conditions normales d'utilisation de l'ensemble monté sont des formes en creux par rapport à la surface porteuse.

Selon d'autres modes de réalisation de l'invention, les moyens autorisant une compression selon au moins la direction circonférentielle d'une partie de l'enveloppe polymérique lors d'un gonflage aux conditions normales d'utilisation de l'ensemble monté combinent des formes en relief et des formes en creux.

Avantageusement selon l'invention, la partie radialement extérieure de la surface porteuse de l'enveloppe polymérique présente une longueur curviligne au moins égale à 18% et de préférence au moins égale à 21% de la longueur curviligne totale de la surface porteuse de l'enveloppe polymérique. Avantageusement encore, la somme de la partie radialement extérieure de la surface porteuse de l'enveloppe polymérique et des deux zones de jonction reliant ladite partie radialement extérieure aux parties latérales présente une longueur curviligne au moins égale à 22% et de préférence au moins égale à 27% de la longueur curviligne totale de la surface porteuse de l'enveloppe polymérique. De telles réalisations selon l'invention permettent d'avoir une partie radialement extérieure de l'enveloppe polymérique qui correspond à la totalité de la surface de la bande de roulement par laquelle surviennent la majorité des incidents causant un perçage de la chambre à air. La forme des moyens autorisant une compression selon au moins la direction circonférentielle d'une partie de l'enveloppe polymérique lors d'un gonflage aux conditions normales d'utilisation de l'ensemble monté peut alors avantageusement être adaptée pour présenter une dimension axiale optimisée pour correspondre au mieux à la largeur de la bande de roulement.

Cette dernière réalisation selon l'invention est particulièrement avantageuse lorsque des moyens autorisant une compression de l'enveloppe polymérique lors d'un gonflage aux conditions normales d'utilisation de l'ensemble monté sont réalisés uniquement sur cette partie radialement extérieure de l'enveloppe polymérique. Cette réalisation est encore avantageuse lorsque les parties latérales comportes également de tels moyens mais destinés à une autre fonction telle que celle d'améliorer la montabilité et pouvant alors être réalisés d'une autre manière éventuellement moins efficace pour lutter contre des perçages du fait d'objets extérieurs lors de roulage.

L'invention propose encore un procédé de fabrication d'une chambre à air pour un ensemble monté.

Selon l'invention, le procédé de fabrication d'une chambre à air pour un ensemble monté, constituée d'une enveloppe polymérique fermée comportant une valve, comporte une première étape consistant réaliser un tube polymérique par extrusion, une deuxième étape consistant à former une enveloppe fermée définissant une surface porteuse en aboutant les deux extrémités du tube, une troisième étape consistant en un moulage de l'enveloppe polymérique obtenue à l'issue de la deuxième étape et au cours de la troisième étape, le moule conférant à l'enveloppe polymérique une forme telle que:
- une ou plusieurs parties de la surface porteuse de l'enveloppe polymérique présentent une courbure méridienne telle que le rapport du rayon moyen de sa courbure méridienne sur le rayon d'un cercle de périmètre égal au périmètre méridien de la surface porteuse de l'enveloppe polymérique est supérieur à 2.5 et de préférence supérieur à 10, lorsque la chambre à air est gonflée avec une pression égale à 2000 Pascal, et
- la somme des longueurs curvilignes dans un plan méridien desdites une ou plusieurs parties est au moins égale à 20 % de la longueur curviligne totale de ladite surface porteuse de l'enveloppe polymérique dans ledit plan méridien.
- lesdites une ou plusieurs parties présentent des moyens autorisant une compression selon au moins la direction circonférentielle de ladite partie de la surface porteuse de l'enveloppe polymérique lors d'un gonflage aux conditions normales d'utilisation de l'ensemble monté.

Avantageusement selon l'invention, le moule est constitué d'une paroi cylindrique prolongée latéralement par deux viroles et fermée par une partie radialement intérieure.

Selon une variante de réalisation de l'invention, des moyens autorisant une compression selon au moins la direction circonférentielle d'une partie de l'enveloppe polymérique lors d'un gonflage aux conditions normales d'utilisation de l'ensemble monté sont des formes en relief, de type bosses ou bossages, par rapport à la surface porteuse. Le moule comporte alors des formes en creux correspondantes pour former ces bossages sur l'enveloppe polymérique.

Selon une autre variante de réalisation de l'invention, des moyens autorisant une compression selon au moins la direction circonférentielle d'une partie de l'enveloppe polymérique lors d'un gonflage aux conditions normales d'utilisation de l'ensemble monté sont des formes en creux, par rapport à la surface porteuse. Le moule comporte alors des formes en relief correspondantes pour former ces creux sur l'enveloppe polymérique.

Selon une dernière variante de l'invention, des formes en relief, de type bosses ou bossages, et des formes en creux peuvent être combinées.

Avantageusement encore selon l'invention, les zones de liaison entre la partie radialement extérieure et les parties latérales présentent un rayon de courbure inférieur à 6 mm.

D'autres détails et caractéristiques avantageux de l'invention ressortiront ci-après de la description d'un exemple de réalisation de l'invention en référence aux figures 1 à 7 qui représentent :
- figure 1, un schéma d'une vue partielle en coupe radiale d'une chambre à air selon l'invention,
- figure 2a, un schéma d'une vue partielle en perspective de la chambre à air selon la figure 1,
- figure 2b, un schéma d'une vue partielle en perspective d'une chambre à air selon un autre mode de réalisation de l'invention,
- figure 3, un schéma d'une vue partielle en coupe radiale d'une chambre à air usuelle,
- figure 4, un schéma d'une vue partielle en perspective de la chambre à air selon la figure 3,
- figure 5, un schéma d'une vue partielle en coupe radiale d'une chambre à air de forme usuelle et comportant des bossages,
- figure 6, un schéma d'une vue partielle en perspective de la chambre à air selon la figure 5.

Les figures ne sont pas représentées à l'échelle pour en simplifier la compréhension.

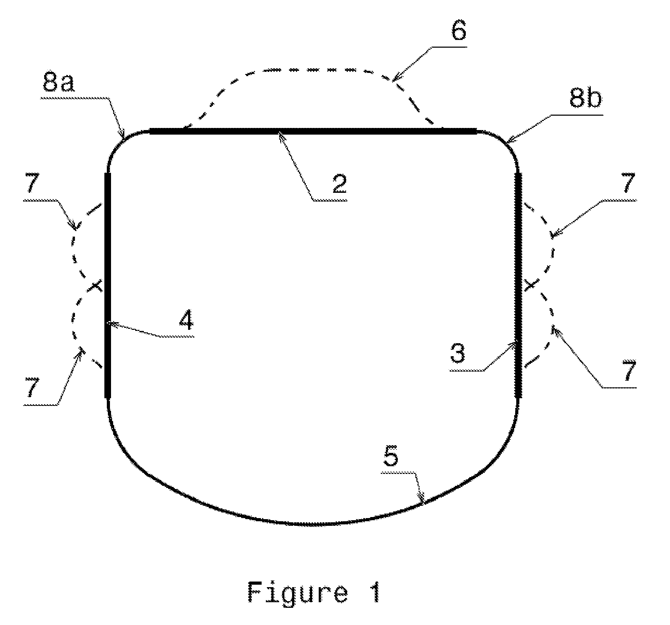

La figure 1 représente schématiquement une vue en coupe radiale d'une chambre à air 1 pour un pneumatique de bicyclette de dimension 37/622. La figure 1 illustre la chambre à air 1 au sein du moule de fabrication.

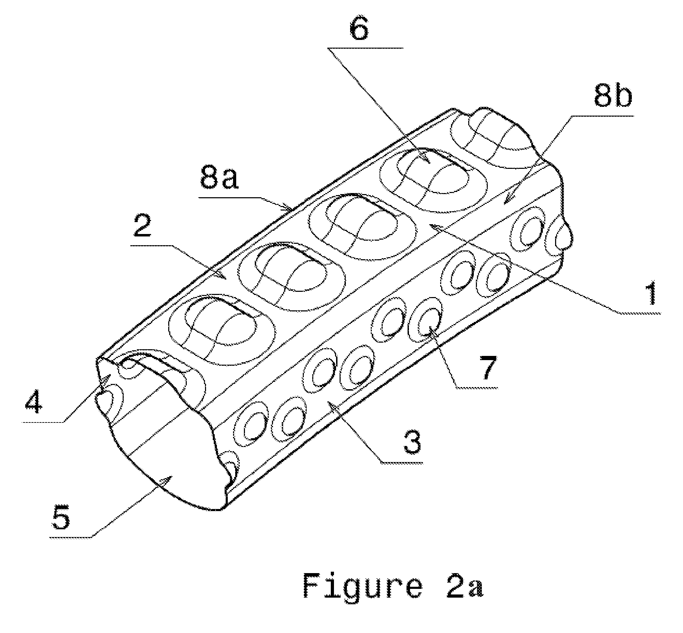

La figure 2a représente schématiquement une vue partielle en perspective de la chambre à air de la figure 1. Sur la figure 2a, la chambre à air est gonflée avec une pression égale à 2000 Pascal. Cette faible pression permet de ne pas déformer totalement la forme de la chambre à air conférée dans le moule.

Comme expliqué précédemment, la chambre à air est réalisée selon un procédé en plusieurs étapes. Durant une première étape, on extrude un tube polymérique. Durant une deuxième étape on forme une enveloppe fermée constituée d'une surface porteuse en aboutant les deux extrémités du tube. Et durant une troisième étape, l'enveloppe ainsi obtenue est moulée pour lui conférer la forme telle que définie par l'invention.

La surface porteuse est ainsi constituée de six parties 2, 3, 4, 5, 8a et 8b.

Les figures montrent que la partie radialement extérieure 2 est reliée à chacune des parties latérales 3, 4 par les parties 8a, 8b qui forment des zones de jonction présentant un rayon de courbure inférieure à 6 mm. Sur la figure 1, qui correspond à la forme de la chambre à air dans le moule, ce rayon de courbure est égale à 2.6 mm.

La partie supérieure formée de la partie radialement extérieure 2 et des parties 8a et 8b présente une longueur curviligne égale à 24.1 mm soit 28% de la longueur curviligne totale de ladite surface porteuse de l'enveloppe polymérique égale à 87 mm. La partie radialement extérieure 2 présente quant à elle une longueur curviligne égale à 19.2 mm soit 22% de la longueur curviligne totale de ladite surface porteuse de l'enveloppe polymérique. Sur la partie 2 de cette partie radialement extérieure sont moulées des bosses 6 qui autoriseront une compression selon au moins la direction circonférentielle de ladite partie de la surface porteuse de l'enveloppe polymérique lors d'un gonflage aux conditions normales d'utilisation de l'ensemble monté incorporant la chambre à air 1 et constituée par ailleurs d'une jante et d'un pneumatique, non représentés sur les figures. Les bosses 6 sont réalisées avec un encombrement sur la partie radialement extérieure 2 correspondant à une longueur selon la direction méridienne égale à 17.3 mm et une largeur selon la direction circonférentielle égale à 12.4 mm. 144 bosses 6 sont ainsi réalisées sur la périphérie de la partie radialement extérieure 2. Les bosses 6 présentent une forme sensiblement cylindrique prolongées sur leur périphérie par une zone de jonction permettant un raccordement sur la partie radialement extérieure 2 de la surface porteuse. Lors du moulage, cette partie 2 correspond, comme le montre la figure 1, à une surface cylindrique et les zones de jonction peuvent être définies simplement sans risque de voir apparaître des zones de la surface de ladite partie radialement extérieure en extension lors du gonflage dans un ensemble monté aux conditions normales, la continuité du raccordement entre les bosses 6 et la surface porteuse permettant d'assurer un déploiement continu de l'enveloppe polymérique sur la surface intérieure du pneumatique. Comme le montrent les figures, les dimensions de ces bosses 6 et notamment leur longueur selon la direction méridienne est prévue pour occuper le maximum de la largeur axiale de la surface radialement extérieure 2, elle-même prévue pour correspondre sensiblement à la largeur de la bande de roulement du pneumatique de l'ensemble monté.

Conformément à l'invention, la chambre à air étant gonflée avec une pression égale à 2000 Pascal, la partie radialement extérieure 2 présente une courbure méridienne dont le rayon moyen est égal à 152 mm. Dans les mêmes conditions de gonflage, le rayon du cercle de périmètre égal au périmètre méridien moyen de la surface porteuse de l'enveloppe est égal à 13.8 mm. Le rapport du rayon moyen de sa courbure méridienne sur le rayon d'un cercle de périmètre égal au périmètre méridien moyen de la surface porteuse de l'enveloppe polymérique est ainsi égal à 11 et donc supérieur à 10, lorsque la chambre à air est gonflée avec une pression égale à 2000 Pascal.

La surface porteuse de la chambre à air comporte encore deux parties latérales 3, 4 identiques prolongeant axialement la partie radialement extérieure 2 par l'intermédiaire des zones de jonction 8a, 8b pour la relier à la partie radialement intérieure 5. Chacune des parties latérales 3, 4 présente une longueur curviligne égale à 15 % de la longueur curviligne totale de ladite surface porteuse de l'enveloppe polymérique. Sur ces parties latérales 3, 4 sont moulées des bosses 7 qui pourront autoriser une compression selon au moins la direction circonférentielle de ladite partie de la surface porteuse de l'enveloppe polymérique lors d'un gonflage aux conditions nominales d'utilisation de l'ensemble monté incorporant la chambre à air 1 et constituée par ailleurs d'une jante et d'un pneumatique. Il s'avère également que les bosses 7 ainsi moulées sur ces parties latérales 3, 4 de la chambre à air 1 permettent une amélioration notable du montage de la chambre à air dans l'ensemble monté en diminuant notablement les risques de pincement de la chambre à air. La répartition sur deux lignes circonférentielles en quinconces de ces bosses 7, comme le montre la figure 2a, est notamment particulièrement bénéfiques à l'encontre de ces risques de pincement au montage. Les bosses 7 présentent une forme sensiblement sphérique, avec un rayon sensiblement égal à 2.6 mm, prolongées sur leur périphérie par une zone de jonction permettant un raccordement sur les parties latérales 3, 4 de la surface porteuse. Lors du moulage, ces parties latérales 3 et 4 correspondent, comme le montre la figure 1, à des surfaces planes et les zones de jonction peuvent être définies simplement sans risque de voir apparaître des zones des surfaces desdites parties latérales 3, 4 en extension lors du gonflage dans un ensemble monté aux conditions normales, la continuité du raccordement entre les bosses 7 et la surface porteuse permettant d'assurer un déploiement continu de l'enveloppe polymérique sur la surface intérieure du pneumatique.

Conformément à l'invention, la chambre à air étant gonflée avec une pression égale à 2000 Pascal, les parties latérales 3, 4 présentent une courbure méridienne dont le rayon moyen est égal à 165 mm. Le rapport du rayon moyen de la courbure méridienne des parties latérales sur le rayon d'un cercle de périmètre égal au périmètre méridien moyen de la surface porteuse de l'enveloppe polymérique est égal à 12 et donc supérieur à 10, lorsque la chambre à air est gonflée avec une pression égale à 2000 Pascal.

Les parties latérales 3 et 4 sont également reliées l'une à l'autre par une partie radialement intérieure 5 de la chambre à air 1 dont la forme est indifférente et qui vient au contact du fond de jante et des bourrelets du pneumatique.

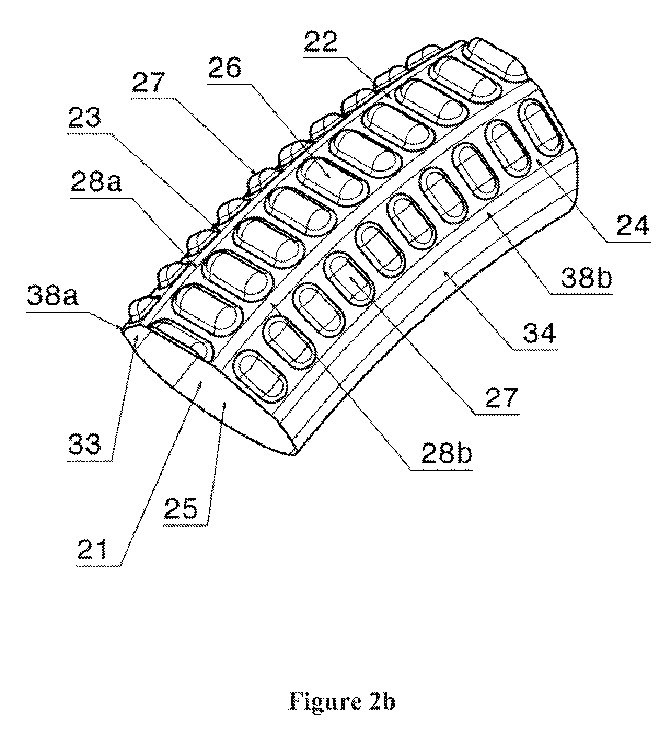

La figure 2b représente schématiquement une vue partielle en perspective d'une chambre à air 21 selon l'invention destinée à être associer à des ensembles montés de plus grande dimension notamment pour motocyclette. Sur la figure 2b, la chambre à air est gonflée avec une pression égale à 2000 Pascal. Cette faible pression permet de ne pas déformer totalement la forme de la chambre à air conférée dans le moule.

La surface porteuse est ainsi constituée de 10 parties 22, 23, 24, 25, 28a, 28b, 33, 34, 38a et 38b.

La partie supérieure formée de la partie radialement extérieure 22, des parties 28a et 28b, des parties 23 et 24, des parties 38a et 38b et des parties 33 et 34 présente une longueur curviligne égale à 116 mm soit 53 % de la longueur curviligne totale de ladite surface porteuse de l'enveloppe polymérique égale à 220.7 mm. La partie radialement extérieure 22 présente quant à elle une longueur curviligne égale à 36 mm soit 16 % de la longueur curviligne totale de ladite surface porteuse de l'enveloppe polymérique. Sur la partie 22 de cette partie radialement extérieure sont moulées des bosses 26.

Conformément à l'invention, la chambre à air étant gonflée avec une pression égale à 2000 Pascal, la partie radialement extérieure 22 présente une courbure méridienne dont le rayon moyen est égal à 210 mm. Dans les mêmes conditions de gonflage, le rayon du cercle de périmètre égal au périmètre méridien moyen de la surface porteuse de l'enveloppe est égal à 35 mm. Le rapport du rayon moyen de sa courbure méridienne sur le rayon d'un cercle de périmètre égal au périmètre méridien moyen de la surface porteuse de l'enveloppe polymérique est ainsi égal à 6 et donc supérieur à 2.5, lorsque la chambre à air est gonflée avec une pression égale à 2000 Pascal.

La surface porteuse de la chambre à air comporte deux parties latérales 23, 24 identiques prolongeant axialement la partie radialement extérieure 22 par l'intermédiaire des zones de jonction 28a, 28b, présentant un rayon de courbure inférieure à 6 mm. Chacune des parties latérales 23, 24 présente une longueur curviligne égale à 13 % de la longueur curviligne totale de ladite surface porteuse de l'enveloppe polymérique. Sur ces parties latérales 23, 24 sont moulées des bosses 27.

Conformément à l'invention, la chambre à air étant gonflée avec une pression égale à 2000 Pascal, les parties latérales 23, 24 présentent une courbure méridienne dont le rayon moyen est égal à 202 mm. Le rapport du rayon moyen de la courbure méridienne des parties latérales sur le rayon d'un cercle de périmètre égal au périmètre méridien moyen de la surface porteuse de l'enveloppe polymérique est égal à 5.8 et donc supérieur à 2.5, lorsque la chambre à air est gonflée avec une pression égale à 2000 Pascal.

La surface porteuse de la chambre à air comporte encore deux parties latérales 33, 34 identiques prolongeant axialement les parties latérales 23 et 24 par l'intermédiaire des zones de jonction 38a, 38b, présentant un rayon de courbure inférieure à 6 mm. Chacune des parties latérales 33, 34 présente une longueur curviligne égale à 5.5 % de la longueur curviligne totale de ladite surface porteuse de l'enveloppe polymérique.

Conformément à l'invention, la chambre à air étant gonflée avec une pression égale à 2000 Pascal, les parties latérales 33, 34 présentent une courbure méridienne dont le rayon moyen est égal à 190 mm. Le rapport du rayon moyen de la courbure méridienne des parties latérales sur le rayon d'un cercle de périmètre égal au périmètre méridien moyen de la surface porteuse de l'enveloppe polymérique est égal à 5.4 et donc supérieur à 2.5, lorsque la chambre à air est gonflée avec une pression égale à 2000 Pascal.

Les parties latérales 33 et 34 sont également reliées l'une à l'autre par une partie radialement intérieure 25 de la chambre à air 21 dont la forme est indifférente et qui vient au contact du fond de jante et des bourrelets du pneumatique.

L'invention ne doit pas être comprise comme étant limitée à la description de ces exemples. La forme des bosses et leurs dispositions sur la surface porteuse de la chambre à air peuvent notamment être définies différemment.

Par ailleurs, la chambre à air telle que définie selon l'invention peut encore être associée à des liquides, fluides ou gels composés de produits colmatants qui sont introduits dans la chambre à air et peuvent contribuer à colmater des trous accidents pour la dimension desquels la mise en compression de la surface de la chambre à air pourrait être insuffisante.

Des essais selon l'invention ont été réalisés. Ils ont consisté à monter des chambres à air telles que décrites en référence aux figures 1 et 2 et à effectuer des roulages en provoquant des crevaisons.

Les résultats sont donnés comparativement à deux chambres témoins.

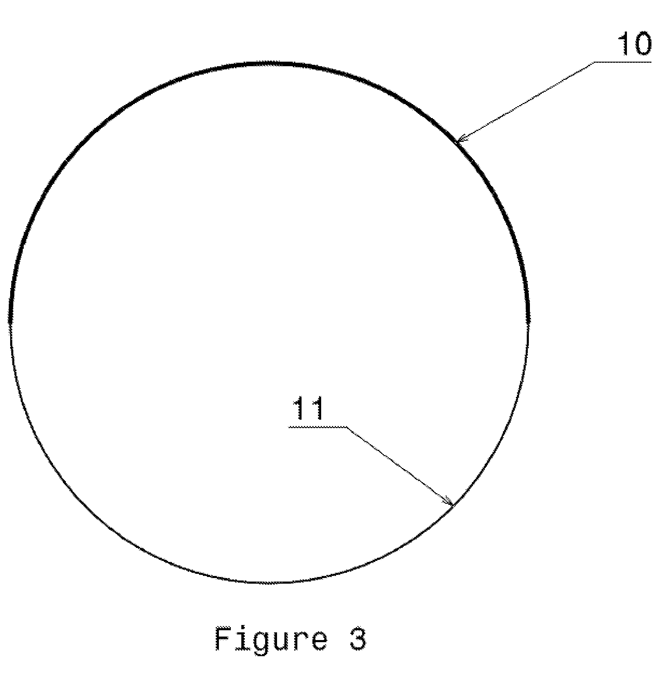

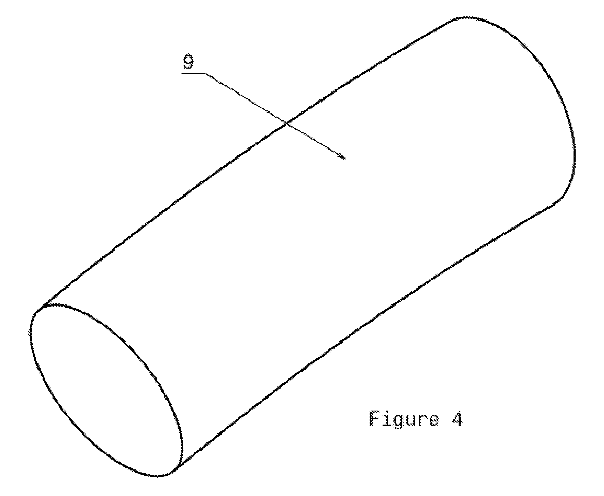

La première chambre témoin est représentée sur les figures 3 et 4. Il s'agit d'une chambre usuelle 9 à section torique. Elle est composée d'une partie radialement extérieure 10 et d'une partie radialement intérieure 11. Elle ne comporte pas de parties latérales comme défini selon l'invention. Le rayon du cercle est 13 mm.

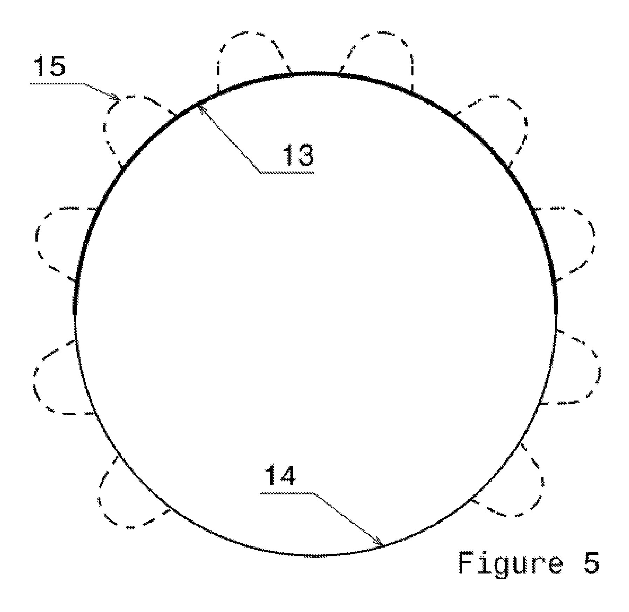

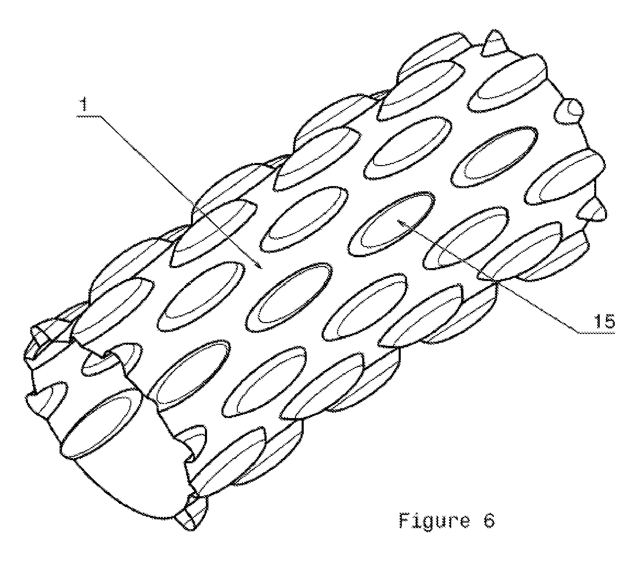

La deuxième chambre témoin est représentée sur les figures 5 et 6. Il s'agit d'une chambre 12 comportant des bosses sur une surface torique. La surface porteuse est un cercle de rayon 13.55 mm constitué d'une partie radialement extérieure 13 et d'une partie radialement intérieure 14. Elles possèdent 1180 bosses 15, 10 selon la direction méridiennes et 118 selon la direction circonférentielle. Le raccordement entre les bosses 15 et la surface porteuse 13-14 ne présente pas une continuité comme dans le cas de l'invention.

Les trois chambres ont une épaisseur identique de 0.9 mm. La chambre 1 selon l'invention présente une masse de 185 grammes. La première chambre témoin 9 présente une masse de 168 grammes. La deuxième chambre témoin 12 présente une masse de 210 grammes.

Une perforation avec des clous de menuisiers de diamètre 1.8 mm et de longueur 30 mm à été faites dans chaque chambre testée et on mesure le temps en seconde pour passer de 3.2 bars à 2.2 bars. On a répété la mesure sur 10 chambres. Le tableau suivant donne le temps moyen, le plus grand temps et le plus petit temps obtenus :

| | Chambre 1 (invention) | chambre 9 | chambre 12 |
|---|---|---|---|
| temps moyen | 865 | 39 | 377 |
| temps maximum | 954 | 45 | 985 |
| temps minimum | 687 | 37 | 97 |

Les valeurs les plus importantes obtenues sur la chambre 12 correspondent au cas où la perforation a eu lieu au sommet d'une bosse 15, les valeurs les plus petites quand elles ont eu lieu dans des zones proches du raccordement entre les bosses 15 et la surface porteuse.

## Revendications

1. Chambre à air (1) pour un ensemble monté constituée d'une enveloppe polymérique fermée constituée d'une surface porteuse (2, 3, 4, 5, 8a, 8b) comportant une valve et des moyens (6, 7), sur au moins une partie de ladite surface porteuse, autorisant une compression selon au moins la direction circonférentielle de ladite partie de l'enveloppe polymérique lors d'un gonflage aux conditions normales d'utilisation de l'ensemble monté, **caractérisée en ce que** une ou plusieurs parties de la surface porteuse (2, 3, 4, 5, 8a, 8b) de l'enveloppe polymérique présente une courbure méridienne telle que le rapport du rayon moyen de sa courbure méridienne sur le rayon d'un cercle de périmètre égal au périmètre méridien de la surface porteuse de l'enveloppe polymérique est supérieur à 2.5 et de préférence supérieur à 10, lorsque la chambre à air est gonflée avec une pression égale à 2000 Pascal et **en ce que** la somme des longueurs curvilignes dans un plan méridien desdites une ou plusieurs parties (2, 3, 4, 5, 8a, 8b) est au moins égale à 20 % de la longueur curviligne totale de ladite surface porteuse de l'enveloppe polymérique dans ledit plan méridien.

2. Chambre à air (1) selon la revendication 1, **caractérisée en ce que** la surface porteuse de l'enveloppe polymérique est constituée d'au moins deux parties (2, 3, 4, 5, 8a, 8b) présentant chacune une longueur curviligne dans un plan méridien, **en ce que** la somme desdites longueurs curvilignes est au moins égale à 25 % de la longueur curviligne totale de ladite surface porteuse de l'enveloppe polymérique dans ledit plan méridien, et **en ce que** la courbure méridienne de chacune desdites parties (2, 3, 4, 5, 8a, 8b) est telle que le rapport du rayon moyen de ladite courbure méridienne sur le rayon d'un cercle de périmètre égal au périmètre méridien de la surface porteuse de l'enveloppe polymérique est supérieur à 2.5 et de préférence supérieur à 10, lorsque la chambre à air est gonflée avec une pression égale à 2000 Pascal.

3. Chambre à air (1) selon la revendication 1 ou 2, **caractérisée en ce que** la surface porteuse de l'enveloppe polymérique est constituée d'au moins trois parties (2, 3, 4, 5, 8a, 8b) présentant chacune une longueur curviligne dans un plan méridien, **en ce que** la somme desdites longueurs curvilignes est au moins égale à 36 % de la longueur curviligne totale de ladite surface porteuse de l'enveloppe polymérique dans ledit plan méridien, et **en ce que** la courbure méridienne de chacune desdites parties (2, 3, 4, 5, 8a, 8b) est telle que le rapport du rayon moyen de ladite courbure méridienne sur le rayon d'un cercle de périmètre égal au périmètre méridien de la surface porteuse de l'enveloppe polymérique est supérieur à 2.5 et de préférence supérieur à 10, lorsque la chambre à air est gonflée avec une pression égale à 2000 Pascal.

4. Chambre à air (1) selon la revendication 3, **caractérisé en ce que** la surface porteuse de l'enveloppe polymérique est constituée d'au moins trois parties (2, 3, 4, 5, 8a, 8b) présentant chacune une longueur curviligne dans un plan méridien au moins égale à 12% de la longueur curviligne totale de ladite surface porteuse de l'enveloppe polymérique dans ledit plan méridien, **en ce qu'**une partie radialement extérieure (2) présente une courbure méridienne telle que le rapport du rayon moyen de sa courbure méridienne sur le rayon d'un cercle de périmètre égal au périmètre méridien de la surface porteuse de l'enveloppe polymérique est supérieur à 2.5 et de préférence supérieur à 10, lorsque la chambre à air est gonflée avec une pression égale à 2000 Pascal et **en ce que** le rapport du rayon moyen de la courbure méridienne des parties latérales (3, 4) sur le rayon d'un cercle de périmètre égal au périmètre méridien de la surface porteuse de l'enveloppe polymérique est supérieur à 2.5 et de préférence supérieur à 10, lorsque la chambre à air est gonflée avec une pression égale à 2000 Pascal.

5. Chambre à air (1) selon la revendication 4, **caractérisé en ce que** deux parties latérales (3, 4) prolongent chacune axialement la partie radialement extérieure (2) et sont reliées à ladite partie radialement extérieure (2) par des zones de jonction (8a, 8b) présentant un rayon de courbure inférieur à 6 mm.

6. Chambre à air (1) selon l'une des revendications 4 ou 5, **caractérisé en ce que** la surface porteuse (2, 3, 4, 5, 8a, 8b) de l'enveloppe polymérique comporte des moyens (6) autorisant une compression selon au moins la direction circonférentielle lors d'un gonflage aux conditions normales d'utilisation de l'ensemble monté sur la partie radialement extérieure (2).

7. Chambre à air (1) selon l'une des revendications 4 ou 5, **caractérisé en ce que** la surface porteuse (2, 3, 4, 5, 8a, 8b) de l'enveloppe polymérique comporte des moyens (7) autorisant une compression selon au moins la direction circonférentielle lors d'un gonflage aux conditions normales d'utilisation de l'ensemble monté sur les deux parties latérales (3, 4).

8. Chambre à air (1) selon l'une des revendications précédentes, **caractérisé en ce que** des moyens (6, 7) autorisant une compression selon au moins la direction circonférentielle d'une partie de l'enveloppe polymérique lors d'un gonflage aux conditions normales d'utilisation de l'ensemble monté sont des formes en relief par rapport à la surface porteuse (2, 3, 4, 5, 8a, 8b).

9. Chambre à air (1) selon l'une des revendications précédentes, **caractérisé en ce que** des moyens autorisant une compression selon au moins la direction circonférentielle d'une partie de l'enveloppe polymérique lors d'un gonflage aux conditions normales d'utilisation de l'ensemble monté sont des formes en creux par rapport à la surface porteuse (2, 3, 4, 5, 8a, 8b).

10. Chambre à air (1) selon l'une des revendications 4 ou 5, **caractérisé en ce que** la partie radialement extérieure (2) présente une longueur curviligne dans un plan méridien au moins égale à 18% et de préférence au moins égale à 21 % de la longueur curviligne totale de la surface porteuse (2, 3, 4, 5, 8a, 8b) de l'enveloppe polymérique dans ledit plan méridien.

11. Procédé de fabrication d'une chambre à air (1) pour un ensemble monté, constituée d'une enveloppe polymérique fermée comportant une valve, **caractérisé en ce qu'**il comporte une première étape consistant réaliser un tube polymérique par extrusion, **en ce qu'**il comporte une deuxième étape consistant à former une enveloppe fermée définissant une surface porteuse (2, 3, 4, 5, 8a, 8b) en aboutant les deux extrémités du tube, **en ce qu'**il comporte une troisième étape consistant en un moulage de l'enveloppe polymérique obtenue à l'issue de la deuxième étape et **en ce qu'**au cours de la troisième étape, le moule confère à l'enveloppe polymérique une forme telle que:
- une ou plusieurs parties de la surface porteuse (2, 3, 4, 5, 8a, 8b) de l'enveloppe polymérique présentent une courbure méridienne telle que le rapport du rayon moyen de sa courbure méridienne sur le rayon d'un cercle de périmètre égal au périmètre méridien de la surface porteuse de l'enveloppe polymérique est supérieur à 2.5 et de préférence supérieur à 10, lorsque la chambre à air est gonflée avec une pression égale à 2000 Pascal, et
- la somme des longueurs curvilignes dans un plan méridien desdites une ou plusieurs parties (2, 3, 4, 5, 8a, 8b) est au moins égale à 20 % de la longueur curviligne totale de ladite surface porteuse de l'enveloppe polymérique dans ledit plan méridien.
- lesdites une ou plusieurs parties (2, 3, 4) présentent des moyens (6, 7) autorisant une compression selon au moins la direction circonférentielle de ladite partie de la surface porteuse de l'enveloppe polymérique lors d'un gonflage aux conditions normales d'utilisation de l'ensemble monté.

## Patentansprüche

1. Innenschlauch (1) für eine montierte Einheit, bestehend aus einem geschlossenen Polymermantel, bestehend aus einer Trägeroberfläche (2, 3, 4, 5, 8a, 8b), umfassend ein Ventil und Mittel (6, 7), auf mindestens einem Abschnitt der Trägeroberfläche, die eine Kompression gemäß mindestens der Umfangsrichtung des Abschnitts des Polymermantels während eines Aufpumpens unter normalen Nutzungsbedingungen der montierten Einheit ermöglichen, **dadurch gekennzeichnet, dass** ein oder mehrere Abschnitte der Trägeroberfläche (2, 3, 4, 5, 8a, 8b) des Polymermantels eine solche Meridiankrümmung aufweisen, dass das Verhältnis des mittleren Radius seiner Meridiankrümmung zum Radius eines Kreises mit einem Umfang, der gleich dem Meridianumfang der Trägeroberfläche des Polymermantels ist, größer als 2,5 und bevorzugt größer als 10 ist, wenn der Innenschlauch mit einem Druck gleich 2.000 Pascal aufgepumpt wird, und dadurch, dass die Summe der gekrümmten Linien in einer Meridianebene des einen oder der mehreren Abschnitte (2, 3, 4, 5, 8a, 8b) mindestens gleich 20 % der gesamten gekrümmten Linie der Trägeroberfläche des Polymermantels in der Meridianebene ist.

2. Innenschlauch (1) nach Anspruch 1, **dadurch gekennzeichnet, dass** die Trägeroberfläche des Polymermantels aus mindestens zwei Abschnitten (2, 3, 4, 5, 8a, 8b) besteht, die jeweils eine in einer Meridianebene gekrümmte Linie aufweisen, dadurch, dass die Summe der gekrümmten Linien mindestens gleich 25 % der gesamten gekrümmten Linien der Trägeroberfläche des Polymermantels in der Merianebene beträgt, und dadurch, dass die Meridiankrümmung jedes der Abschnitte (2, 3, 4, 5, 8a, 8b) so ist, dass das Verhältnis des mittleren Radius der Meridiankrümmung zum Radius eines Kreises mit einem Umfang, der gleich dem Meridianumfang der Trägeroberfläche des Polymermantels ist, größer als 2,5 und bevorzugt größer als 10 ist, wenn der Innenschlauch mit einem Druck gleich 2.000 Pascal aufgepumpt ist.

3. Innenschlauch (1) nach Anspruch 1 oder 2, **dadurch gekennzeichnet, dass** die Trägeroberfläche des Polymermantels aus mindestens drei Abschnitten (2, 3, 4, 5, 8a, 8b) besteht, die jeweils eine in einer Meridianebene gekrümmte Linie aufweisen, dadurch, dass die Summe der gekrümmten Linien mindestens gleich 36 % der gesamten gekrümmten Linien der Trägeroberfläche des Polymermantels in der Merianebene beträgt, und dadurch, dass die Meridiankrümmung jedes der Abschnitte (2, 3, 4, 5, 8a, 8b) so ist, dass das Verhältnis des mittleren Radius der Meridiankrümmung zum Radius eines Kreises eines Umfangs, der gleich dem Meridianumfang der Trägeroberfläche des Polymermantels ist, größer als 2,5 und bevorzugt größer als 10 ist, wenn der Innenschlauch mit einem Druck gleich 2.000 Pascal aufgepumpt ist.

4. Innenschlauch (1) nach Anspruch 3, **dadurch gekennzeichnet, dass** die Trägeroberfläche des Polymermantels aus mindestens drei Abschnitten (2, 3, 4, 5, 8a, 8b) besteht, die jeweils eine in einer Meridianebene gekrümmte Linie mindestens gleich 12 % der gesamten gekrümmten Linie der Trägeroberfläche des Polymermantels in der Meridianebene aufweisen, dadurch, dass ein radialer äußerer Abschnitt (2) eine derartige Meridiankrümmung aufweist, dass das Verhältnis des mittleren Radius seiner Meridiankrümmung zum Radius eines Kreises eines Umfangs, der gleich dem Meridianumfang der Trägeroberfläche des Polymermantels ist, größer als 2,5 und bevorzugt größer als 10 ist, wenn der Innenschlauch mit einem Druck gleich 2.000 Pascal aufgepumpt ist, und dadurch, dass das Verhältnis des mittleren Radius der Meridiankrümmung der seitlichen Abschnitte (3, 4) zum Radius eines Kreises eines Umfangs, der gleich dem Meridianumfang der Trägeroberfläche des Polymermantels ist, größer als 2,5 und bevorzugt größer als 10 ist, wenn der Innenschlauch mit einem Druck gleich 2.000 Pascal aufgepumpt ist.

5. Innenschlauch (1) nach Anspruch 4, **dadurch gekennzeichnet, dass** zwei seitliche Abschnitte (3, 4) den radialen äußeren Abschnitt (2) jeweils axial verlängern und mit dem radialen äußeren Abschnitt (2) über Verbindungszonen (8a, 8b) verbunden sind, die einen Krümmungsradius von weniger als 6 mm aufweisen.

6. Innenschlauch (1) nach einem der Ansprüche 4 oder 5, **dadurch gekennzeichnet, dass** die Trägeroberfläche (2, 3, 4, 5, 8a, 8b) des Polymermantels Mittel (6) umfasst, die eine Kompression gemäß mindestens der Umfangsrichtung während des Aufpumpens unter normalen Nutzungsbedingungen der Einheit auf den radialen äußeren Abschnitt (2) ermöglichen.

7. Innenschlauch (1) nach einem der Ansprüche 4 oder 5, **dadurch gekennzeichnet, dass** die Trägeroberfläche (2, 3, 4, 5, 8a, 8b) des Polymermantels Mittel (7) umfasst, die eine Kompression gemäß mindestens der Umfangsrichtung während des Aufpumpens unter normalen Nutzungsbedingungen der montierten Einheit auf die beiden seitlichen Abschnitte (3, 4) ermöglichen.

8. Innenschlauch (1) nach einem der vorhergehenden Ansprüche, **dadurch gekennzeichnet, dass** die Mittel (6, 7), die eine Kompression gemäß mindestens der Umfangsrichtung eines Abschnitts des Polymermantels während des Aufpumpens unter normalen Nutzungsbedingungen der montierten Einheit ermöglichen, bezogen auf die Trägeroberfläche (2, 3, 4, 5, 8a, 8b), Reliefformen sind.

9. Innenschlauch (1) nach einem der vorhergehenden Ansprüche, **dadurch gekennzeichnet, dass** die Mittel, die eine Kompression gemäß mindestens der Umfangsrichtung eines Abschnitts des Polymermantels während des Aufpumpens unter normalen Nutzungsbedingungen der montierten Einheit ermöglichen, bezogen auf die Trägeroberfläche (2, 3, 4, 5, 8a, 8b), Hohlformen sind.

10. Innenschlauch (1) nach einem der Ansprüche 4 oder 5, **dadurch gekennzeichnet, dass** der radiale äußere Abschnitt (2) eine in einer Meridianebene gekrümmte Linie von mindestens gleich 18 % und bevorzugt mindestens gleich 21 % der gesamten gekrümmten Linie der Trägeroberfläche (2, 3, 4, 5, 8a, 8b) des Polymermantels in der Meridianebene aufweist.

11. Verfahren zur Herstellung eines Innenschlauchs (1) für eine montierte Einheit, bestehend aus einem geschlossenen Polymermantel, umfassend ein Ventil, **dadurch gekennzeichnet, dass** es einen ersten Schritt umfasst, der darin besteht, mittels Extrusion einen Polymerschlauch herzustellen, dadurch, dass es einen zweiten Schritt umfasst, der darin besteht, einen geschlossenen Mantel auszubilden, der eine Trägeroberfläche (2, 3, 4, 5, 8a, 8b) definiert, indem die beiden Enden des Schlauchs verbunden werden, dadurch, dass es einen dritten Schritt umfasst, der in einem Formen des am Ende des zweiten Schritts erhaltenen Polymermantels besteht, und dadurch, dass im Verlauf des dritten Schritts die Form dem Polymermantel eine Form verleiht, so dass:
- ein oder mehrere Abschnitte der Trägeroberfläche (2, 3, 4, 5, 8a, 8b) des Polymermantels eine derartige Meridiankrümmung aufweisen, dass das Verhältnis des mittleren Radius seiner Meridiankrümmung zum Radius eines Kreises eines Umfangs, der gleich dem Meridianumfang der Trägeroberfläche des Polymermantels ist, größer als 2,5 und bevorzugt größer als 10 ist, wenn der Innenschlauch mit einem Druck gleich 2.000 Pascal aufgepumpt ist, und
- die Summe der gekrümmten Linien in einer Meridianebene des einen oder der mehreren Abschnitte (2, 3, 4, 5, 8a, 8b) mindestens gleich 20 % der gesamten gekrümmten Linie der Trägeroberfläche des Polymermantels in der Meridianebene beträgt,
- wobei der eine oder die mehreren Abschnitte (2, 3, 4) Mittel (6, 7) aufweisen, die eine Kompression gemäß mindestens der Umfangsrichtung des Abschnitts der Trägeroberfläche des Polymermantels während eines Aufpumpens unter normalen Nutzungsbedingungen der montierten Einheit ermöglichen.

## Claims

1. Inner tube (1) for an assembled unit, said tube consisting of a closed polymeric envelope consisting of a primary surface (2, 3, 4, 5, 8a, 8b) comprising a valve and, on at least part of said primary surface, means (6, 7) allowing compression in at least the circumferential direction of said part of the polymeric envelope when inflated under the normal conditions of use of the assembled unit, said inner tube being **characterized in that** one or more parts of the primary surface (2, 3, 4, 5, 8a, 8b) of the polymeric envelope have a meridian curvature such that the ratio of the average radius of its meridian curvature to the radius of a circle of perimeter equal to the meridian perimeter of the primary surface of the polymeric envelope is greater than 2.5 and preferably greater than 10, when the inner tube is inflated to a pressure of 2000 pascals and **in that** the sum of the curvilinear lengths in a meridian plane of said one or more parts (2, 3, 4, 5, 8a, 8b) is greater than or equal to 20% of the total curvilinear length of said primary surface of the polymeric envelope in said meridian plane.

2. Inner tube (1) according to Claim 1, **characterized in that** the primary surface of the polymeric envelope consists of at least two parts (2, 3, 4, 5, 8a, 8b), each having a curvilinear length in a meridian plane, **in that** the sum of said curvilinear lengths is greater than or equal to 25% of the total curvilinear length of said primary surface of the polymeric envelope in said meridian plane, and **in that** the meridian curvature of each of said parts (2, 3, 4, 5, 8a, 8b) is such that the ratio of the average radius of said meridian curvature to the radius of a circle of perimeter equal to the meridian perimeter of the primary surface of the polymeric envelope is greater than 2.5 and preferably greater than 10, when the inner tube is inflated to a pressure of 2000 pascals.

3. Inner tube (1) according to Claim 1 or 2, **characterized in that** the primary surface of the polymeric envelope consists of at least three parts (2, 3, 4, 5, 8a, 8b), each having a curvilinear length in a meridian plane, **in that** the sum of said curvilinear lengths is greater than or equal to 36% of the total curvilinear length of said primary surface of the polymeric envelope in said meridian plane, and **in that** the meridian curvature of each of said parts (2, 3, 4, 5, 8a, 8b) is such that the ratio of the average radius of said meridian curvature to the radius of a circle of perimeter equal to the meridian perimeter of the primary surface of the polymeric envelope is greater than 2.5 and preferably greater than 10, when the inner tube is inflated to a pressure of 2000 pascals.

4. Inner tube (1) according to Claim 3, **characterized in that** the primary surface of the polymeric envelope consists of at least three parts (2, 3, 4, 5, 8a, 8b), each having a curvilinear length in a meridian plane greater than or equal to 12% of the total curvilinear length of said primary surface of the polymeric envelope in said meridian plane, **in that** a radially outer part (2) has a meridian curvature such that the ratio of the average radius of its meridian curvature to the radius of a circle of perimeter equal to the meridian perimeter of the primary surface of the polymeric envelope is greater than 2.5 and preferably greater than 10, when the inner tube is inflated to a pressure of 2000 pascals, and **in that** the ratio of the average radius of the meridian curvature of the side parts (3, 4) to the radius of a circle of perimeter equal to the meridian perimeter of the primary surface of the polymeric envelope is greater than 2.5 and preferably greater than 10, when the inner tube is inflated to a pressure of 2000 pascals.

5. Inner tube (1) according to Claim 4, **characterized in that** two side parts (3, 4) each extend axially the radially outer part (2) and are connected to said radially outer part (2) by connecting regions (8a, 8b) having a radius of curvature of less than 6 mm.

6. Inner tube (1) according to either one of Claims 4 and 5, **characterized in that** the primary surface (2, 3, 4, 5, 8a, 8b) of the polymeric envelope comprises means (6) allowing compression in at least the circumferential direction when inflated under the normal conditions of use of the assembled unit on the radially outer part (2).

7. Inner tube (1) according to either one of Claims 4 and 5, **characterized in that** the primary surface (2, 3, 4, 5, 8a, 8b) of the polymeric envelope comprises means (7) allowing compression in at least the circumferential direction when inflated under the normal conditions of use of the assembled unit on the two side parts (3, 4).

8. Inner tube (1) according to one of the preceding claims, **characterized in that** means (6, 7) allowing compression in at least the circumferential direction of a part of the polymeric envelope when inflated under the normal conditions of use of the assembled unit are raised forms above the primary surface (2, 3, 4, 5, 8a, 8b).

9. Inner tube (1) according to one of the preceding claims, **characterized in that** means allowing compression in at least the circumferential direction of a part of the polymeric envelope when inflated under the normal conditions of use of the assembled unit are sunken forms below the primary surface (2, 3, 4, 5, 8a, 8b).

10. Inner tube (1) according to either one of Claims 4 and 5, **characterized in that** the radially outer part (2) has a curvilinear length in a meridian plane greater than or equal to 18% and preferably greater than or equal to 21% of the total curvilinear length of the primary surface (2, 3, 4, 5, 8a, 8b) of the polymeric envelope in said meridian plane.

11. Method of producing an inner tube (1) for an assembled unit, said inner tube consisting of a closed polymeric envelope comprising a valve, said method being **characterized in that** it comprises a first step consisting in making a polymeric tube by extrusion, **in that** it comprises a second step consisting in forming a closed envelope defining a primary surface (2, 3, 4, 5, 8a, 8b) by butting the two ends of the tube, **in that** it comprises a third step consisting in moulding the polymeric envelope obtained at the end of the second step, and **in that** in the course of the third step the mould confers on the polymeric envelope a shape such that:
- one or more parts of the primary surface (2, 3, 4, 5, 8a, 8b) of the polymeric envelope have a meridian curvature such that the ratio of the average radius of its meridian curvature to the radius of a circle of perimeter equal to the meridian perimeter of the primary surface of the polymeric envelope is greater than 2.5 and preferably greater than 10, when the inner tube is inflated to a pressure of 2000 pascals,
- the sum of the curvilinear lengths in a meridian plane of said one or more parts (2, 3, 4, 5, 8a, 8b) is greater than or equal to 20% of the total curvilinear length of said primary surface of the polymeric envelope in said meridian plane, and
- said one or more parts (2, 3, 4) have means (6, 7) allowing compression in at least the circumferential direction of said part of the primary surface of the polymeric envelope when inflated under the normal conditions of use of the assembled unit.
